Europäisches Patentamt

European Patent Office

Office européen des brevets

(19)

(11) Veröffentlichungsnummer: **0 246 353**
**B1**

(12) # EUROPÄISCHE PATENTSCHRIFT

(45) Veröffentlichungstag der Patentschrift:
09.05.90

(21) Anmeldenummer: 86110975.9

(22) Anmeldetag: 08.08.86

(51) Int. Cl.⁵: **F16H 61/16**

(54) Betätigungsvorrichtung für ein automatisches Getriebe an einem Kraftfahrzeug.

(30) Priorität: 22.05.86 DE 3617256

(43) Veröffentlichungstag der Anmeldung:
25.11.87 Patentblatt 87/48

(45) Bekanntmachung des Hinweises auf die Patenterteilung:
09.05.90 Patentblatt 90/19

(84) Benannte Vertragsstaaten:
AT CH DE FR GB IT LI SE

(56) Entgegenhaltungen:
CA-C- 1 203 756
DE-A- 3 337 930
DE-B- 2 334 786
DE-B- 2 503 531
GB-A- 2 056 595
US-A- 3 169 616
US-A- 3 942 614
US-A- 4 096 930
US-A- 4 187 935
US-A- 4 473 141
US-A- 4 572 340

(73) Patentinhaber: AUDI AG,
Auto-Union-Strasse 1 Postfach 220,
D-8070 Ingolstadt(DE)

(72) Erfinder: Barske, Heiko, Dr. Dipl.-Phys.,
Specklestrasse 9, D-8070 Ingolstadt(DE)
Erfinder: Höhn, Bernd-Robert, Dr. Dipl.-Ing.,
Böhmerwaldstrasse 27, D-8074 Gaimersheim(DE)
Erfinder: Pagel, Ernst-Olav, Dr. Dipl.-Ing., Bergstrasse 5,
D-8079 Böhmfeld(DE)
Erfinder: Burkhart, Helmut, Dipl.-Ing., Haydnstrasse 6,
D-8074 Gaimersheim(DE)
Erfinder: Haderer, Johann, Haus Nr. 31,
D-8079 Kipfenberg/Dunsdorf(DE)

(74) Vertreter: Le Vrang, Klaus, AUDI AG
Postfach 220 Patentabteilung I/EQP,
D-8070 Ingolstadt(DE)

**Beschreibung**

Die Erfindung bezieht sich auf eine Betätigungsvorrichtung für ein automatisches Getriebe an einem Kraftfahrzeug gemäß dem Oberbegriff des Anspruchs 1, wie sie aus der US-A 4 473 141 bekannt ist.

Im Gegensatz zu Fahrzeugen mit Handschaltgetrieben, wo beim Einlegen eines Fahrganges die Kupplung getreten werden muß, genügt bei Kraftfahrzeugen mit automatischem Getriebe lediglich ein Verschieben des Wählhebels aus einer Neutralstellung in eine Fahrstellung, um einen Kraftschluß zwischen Motor und Antriebsrädern herzustellen. Der Fahrer muß sich daher vor dem Inbewegungsetzen eines Fahrzeugs mit automatischem Getriebe in keiner Weise mit der Lage der Fußpedale vertraut machen. Entsprechend kommt es bei Fahrzeugen mit automatischem Getriebe hin und wieder vor, daß sich solche Fahrzeuge unbeabsichtigt in Bewegung setzen oder sogar für den Fahrer unbeherrschbar werden, da er die Lage des Bremspedals noch nicht kennt und anstelle des Bremspedals auf das Gaspedal tritt.

Der Erfindung liegt die Aufgabe zugrunde, die Betriebssicherheit und den Bedienungskomfort von mit automatischem Getriebe versehenen Kraftfahrzeugen zu verbessern.

Diese Aufgabe wird mit den Merkmalen des Anspruchs 1 gelöst.

Vorteilhafte Weiterbildungen sind in den abhängigen Ansprüchen enthalten.

Mit der erfindungsgemäß vorgesehenen Einrichtung wird zweierlei erreicht. Zum einen muß der Fahrer im Moment des Einlegens der Fahrstufe, also wenn das Fahrzeug aufgrund des sich einstellenden Kraftschlusses zwischen Motor und Antriebsrädern zu kriechen beginnt, seinen Fuß auf der Bremse haben. Zum anderen wird erreicht, daß der Fahrer, bevor er zum Losfahren Gas gibt, sich mit der Lage des Bremspedals vertraut gemacht hat und dieses Pedal im Bedarfsfalle dann sicher findet.

Die erfindungsgemäß vorgesehene Einrichtung kann insbesondere bei elektronisch gesteuerten automatischen Getrieben in die Getriebesteuerung selbst eingreifen oder aber, was besonders vorteilhaft ist, unmittelbar am Wählhebel des automatischen Getriebes oder einem damit verbundenen Bauteil angreifen. Dies hat den Vorteil, daß dem Fahrer unmittelbar durch die Nichtbeweglichkeit des Wählhebels angezeigt wird, daß er die Bremse betätigen muß.

Mit der der erfindungsgemäßen Betätigungsvorrichtung werden auch diejenigen Fälle abgedeckt, in denen das Fahrzeug aus der N-Stellung heraus in Betrieb gesetzt wird. Hier ist jedoch eine Logikschaltung erforderlich, da es, wie bei herkömmlichen Fahrzeugen üblich, möglich sein muß, ohne Betätigung der Fußbremse bei einem rollenden Fahrzeug aus der N-Stellung in eine Fahrstellung zu schalten bzw. ein festgefahrenes Fahrzeug durch rasches Wechseln zwischen Rückwärtsgang und Vorwärtsgang wieder flott zu bekommen.

Bei einer Ausführungsform der Betätigungsvorrichtung kann das automatische Getriebe bei einem Fahrzeug, dessen Zündstromkreis beispielsweise nicht in Betrieb ist, aus der Neutralstufe heraus geschaltet werden. Dies ist von Vorteil, wenn die Neutralstufe die Stufe P ist, in der das Fahrzeug blockiert ist. Andernfalls wäre ein Schieben des Fahrzeugs ohne herstellen des betriebsbereiten Zustandes nicht möglich.

Eine weitere Ausführungsform der Erfindung ist gegenteilig geschaltet. Hier wird das Fahrzeug, wenn die Neutralstufe die Stufe ist, in der das Fahrzeug blockiert ist, gegen unbeabsichtigtes Bewegen, auch gegen Diebstahl, geschützt, solange beispielsweise der Zündstromkreis nicht eingeschaltet ist.

Nach einer vorteilhaften Ausführungsform der Betätigungsvorrichtung wird nicht der Wählhebel unmittelbar, sondern lediglich die Sperreinrichtung des Wählhebels verriegelt. Dadurch brauchen vom Elektromagneten nur geringe Kräfte aufgebracht zu werden.

Eine andere Ausführungsform der Betätigungsvorrichtung kann in ihrem Aufbau besonders einfach sein. Dennoch ist sie im Sinne der Lösung der Erfindungsaufgabe sehr wirksam, da Automatfahrzeuge weitgehend aus der P-Stellung heraus in Betrieb gesetzt werden. Durch weitere Merkmale wird vermieden, daß aus der N-Stellung des Wählhebels das Fahrzeug gestartet werden kann.

Weiterhin können verschiedene logische Bedingungen vorgesehen sein, unter denen die Verriegelungseinrichtung in der N-Stellung des Wählhebels aktiviert bzw. desaktiviert wird.

Alternativ zu der an der Wähleinrichtung angreifenden Verriegelungseinrichtung kann jedoch auch unmittelbar in die hydraulische Steuerung des automatischen Getriebes eingegriffen werden. Ein derartiger Eingriff bietet sich insbesondere dann an, wenn mit geringem Aufwand, beispielsweise durch Ansteuerung eines bereits vorhandenen Schaltventiles, eine den Kraftfluß im automatischen Getriebe unterbrechende, hydraulische Kupplung ansteuerbar ist.

Mit weiteren Merkmalen wird erreicht, daß mit der Einrichtung nicht vertraute Fahrer das Fahrzeug ohne Probleme fahren können. Die Warnvorrichtung kann ein akustisches Signal, beispielsweise ein Sprachsignal "bitte Fußbremse betätigen" oder ein entsprechendes optisches Signal geben.

Die Erfindung wird im folgenden anhand schematischer Zeichnungen beispielsweise und mit weiteren Einzelheiten näher erläutert. Es zeigen:

Fig. 1 eine Betätigungsvorrichtung mit einer elektromagnetischen Verriegelungseinrichtung an der Wähleinrichtung eines Kraftfahrzeuges mit einer hydraulischen Betriebsbremse und einem automatischen Getriebe;

Fig. 2 einen Ausschnitt einer hydraulischen Steuerung eines automatischen Getriebes eines Kraftfahrzeuges mit einem elektromagnetischen Schaltventil,

Fig. 3 eine Vorrichtung mit einer elektronischen Verriegelungseinrichtung in einem Kraftfahrzeug mit einem elektronisch gesteuerten, automatischen Getriebe,

Fig. 4 eine weitere Betätigungsvorrichtung mit einer elektromagnetischen Verriegelungseinrichtung an einer Wähleinrichtung mit einer manuell zu betätigenden Sperreinrichtung in der P-Stellung, in einem senkrechten Querschnitt durch den Wählhebel, und

Fig. 5 die Betätigungseinrichtung in einer Seitenansicht gemäß dem Pfeil X der Fig. 4.

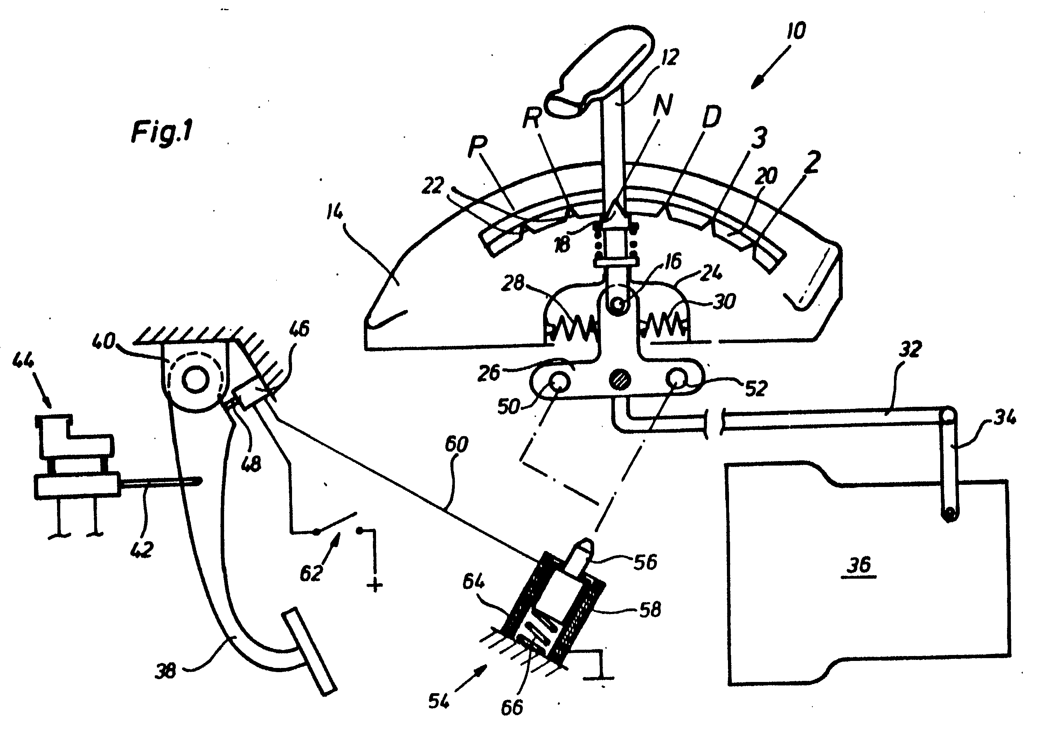

Die Fig. 1 zeigt eine Wähleinrichtung (10) eines Kraftfahrzeuges mit einem Wählhebel (12), welcher in einer am Unterboden des Kraftfahrzeuges befestigten Konsole (14) um eine Schwenkachse (16) gelagert ist. Der Wählhebel (12) weist eine axial verschiebliche, federnde Raste (18) auf, die in eine Rastschiene (20) mit entsprechenden Vertiefungen (22) eingreift. Die Vertiefungen (22) definieren dabei die Wählhebelstellungen N für Neutral, R für Rückwärtsfahrt, P für Neutral plus Parkbremse, D für den automatischen Vorwärtsbetrieb des Kraftfahrzeuges, sowie in bekannter Weise die Gangstufen 3 und 2. An dem Wählhebel ist eine Anschlagtasse (24) befestigt, innerhalb der auf der Schwenkachse (16) ein Zwischenhebel (26) gelagert ist. Der Zwischenhebel (26) wird durch zwei Druckfedern (28), (30) in eine definierte Mittelstellung zum Wählhebel (12) gehalten, wobei diese Mittelstellung ferner durch eine nicht dargestellte Rastierung gesichert ist. Die Druckfedern (28), (30) stützen sich einerseits am Zwischenhebel (26) und andererseits an der Anschlagtasse (24) ab.

Der Zwischenhebel (26) ist über ein Gestänge (32) und einen Schalthebel (34) mit dem automatischen Getriebe (36) des Kraftfahrzeuges verbunden. Das automatische Getriebe kann bekannter Bauart sein, z. B. mit einem hydrodynamischen Drehmomentwandler, mehreren Planetenradsätzen und hydraulisch schaltbaren Kupplungen und Bremsen sowie mit einer Parkbremse, bei der die Abtriebswelle des automatischen Getriebes blockierbar ist.

Die nur schematisch angedeutete Betriebsbremse des Kraftfahrzeuges weist ein Bremsbetätigungsglied bzw. ein Bremspedal (38) auf, welches an einer an der Stirnwand des Kraftfahrzeuges festgelegten Konsole (40) schwenkbar gelagert ist. An dem Bremspedal (38) ist ebenfalls schwenkbar eine Stange (42) befestigt, welche auf den nicht näher dargestellten Hauptbremszylinder (44) der hydraulischen Bremse des Kraftfahrzeuges einwirkt. An der Konsole (40) ist ferner ein elektrischer Unterbrecherschalter (46) befestigt, dessen federnd verschieblicher Stift (48) bei in Ruhestellung befindlichem Bremspedal betätigt ist. Der Unterbrecherschalter (46) steuert in bekannter Weise die nicht dargestellten Bremsleuchten des Kraftfahrzeuges.

An dem Zwischenhebel (26) sind zwei Durchbrüche (50), (52) vorgesehen, die mit einer an der Konsole (14) befestigten, elektromagnetischen Sperre (Einrichtung) (54) eine Verriegelungseinrichtung bilden. Die Sperre (54) weist einen verschiebbaren Stift (56) auf, der bei unter Spannung stehender Wicklung (58) der Sperre (54) in einen der Durchbrüche (50), (52) eingreift. Die Sperre (54) ist entgegen der Darstellung in der Fig. 1 in unmittelbarer Nähe des Zwischenhebels (26) derart befestigt, daß der Stift (56) in der Sperrstellung bei in Stellung N befindlichem Wählhebel (12) in den Durchbruch (52), hingegen in Stellung P in den Durchbruch (50) eingreift.

Die Wicklung (58) der elektromagnetischen Sperre (54) liegt einerseits an dem Minuspotential des Kraftfahrzeuges, während deren anderer Ausgang über eine Leitung (60) mit dem einen Kontakt (nicht dargestellt) des Unterbrecherschalters (46) verbunden ist. Der andere Kontakt des Unterbrecherschalters (46) liegt über dem Zündschalter (62) des Kraftfahrzeuges am Pluspotential.

Wird das Kraftfahrzeug gestartet, so wird zunächst der Zündschalter (62) geschlossen. Befindet sich das Bremspedal (38) in Ruhestellung, so sind die beiden Kontakte des Unterbrecherschalters (46) unterbrochen, so daß die elektromagnetische Sperre (54) stromlos ist. Dadurch wird der Stift (56) durch eine in dem Gehäuse (64) der elektromagnetischen Sperre (54) abgestützte Druckfeder (66) gegen den Zwischenhebel (26) gespannt und greift in den Durchbruch (50) oder (52) ein, jenachdem ob der Wählhebel (12) sich in der Stellung P oder N befindet. Es sei betont, daß das Kraftfahrzeug nur in einer der Stellungen P oder N gestartet werden kann, wie bei Kraftfahrzeugen mit automatischen Getrieben üblich.

Wird nunmehr durch die Bedienungsperson beispielsweise aus der Stellung N die Fahrstufe D eingelegt, so wird zwar der Wählhebel (12) entsprechend geschwenkt, während der Zwischenhebel (26) jedoch in seiner verriegelten Position verbleibt. Dabei wird eine der Druckfedern (28), (30) entsprechend gespannt. Erst wenn nunmehr durch die Bedienungsperson die Betriebsbremse des Kraftfahrzeuges aktiviert bzw. das Bremspedal (38) betätigt wird, werden die Kontakte des Unterbrecherschalters (46) überbrückt und die Wicklung (58) der elektromagnetischen Sperre (54) mit Spannung versorgt. Dadurch wird der Stift (56) in das Gehäuse (64) eingezogen und der Zwischenhebel (26) entriegelt. Dieser kann nunmehr durch die Kraft der gespannten Druckfeder (28) oder (30) bis zum Einrasten in dessen Mittenposition verstellt werden, so daß nunmehr die gewählte Gangstufe eingelegt ist. Wird die Bremse durch Entlasten des Bremspedales (38) wieder gelöst, so bewegt sich der Stift (56) wieder gegen den Zwischenhebel (26), wobei jedoch keine Sperrung auftritt, weil nunmehr die Position des Stiftes (56) nicht mehr mit der Position des Durchbruches (52) oder (50) übereinstimmt. Der Stift (56) drückt nunmehr frontal gegen die seitliche Anlagefläche des Zwischenhebels (26), wodurch jedoch keine Verriegelung auftritt. Gegebenenfalls kann die Stirnfläche des Stiftes (56) mit einer reibungsarmen Kunststoffbeschichtung versehen sein.

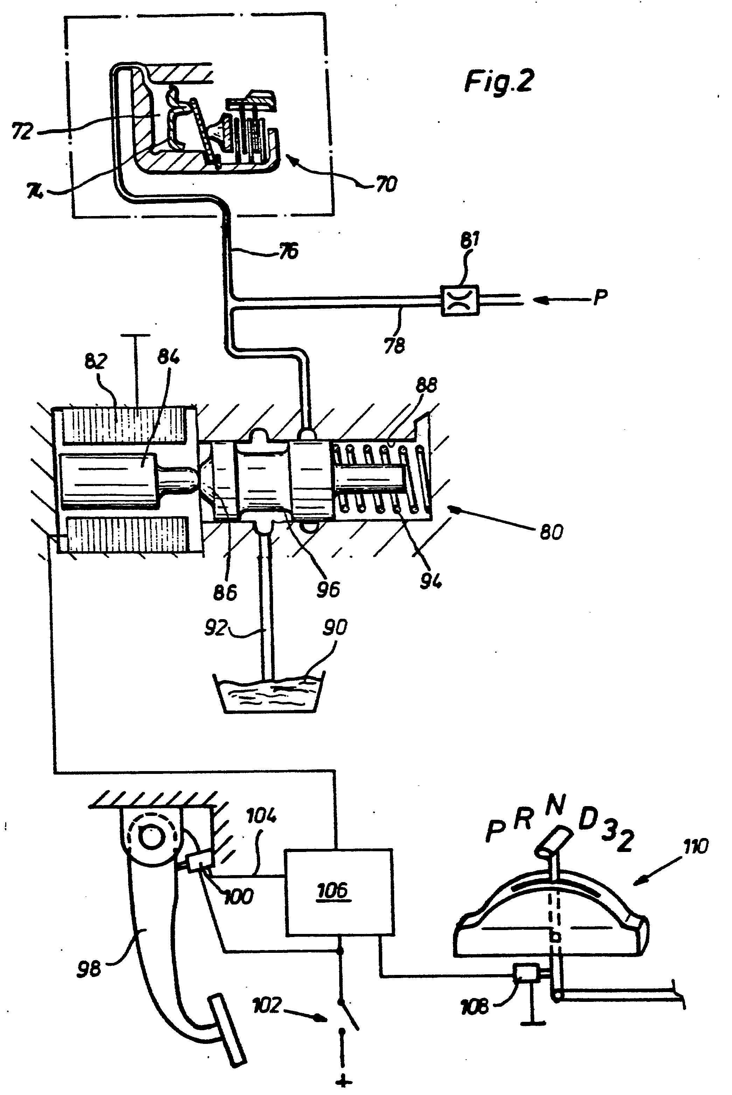

Die Fig. 2 zeigt einen Ausschnitt aus einer hydraulischen Steuerung eines automatischen Getriebes eines Kraftfahrzeuges mit mehreren Planetenradsätzen, deren Bremsen und Kupplungen über Steuerschieber gesteuert sind. Dabei ist mit (70) eine den Kraftfluß des automatischen Getriebes sowohl in der Rückwärts- als auch in den Vorwärtsfahrstufen unterbrechende Kupplung (Einrichtung 70) bezeichnet, deren Druckbeaufschlagungsraum mit (72) und deren Betätigungskolben mit (74) angedeutet ist.

An den Druckbeaufschlagungsraum (72) ist eine Leitung (76) angeschlossen, die über eine Zuführleitung (78) mit einer Drossel (81) mit hydraulischem Druck versorgt ist. Die Druckversorgung kann über das sogenannte Handsteuerventil erfolgen, welches Handsteuerventil (nicht dargestellt) mit der Wähleinrichtung des Kraftfahrzeuges gekoppelt ist. Die Leitung (76) ist mit einem elektromagnetischen Schaltventil (80) verbunden, welches in die hydraulische Steuerung integriert ist. Das Schaltventil (80) weist ein Spulenteil (82) und einen Ankerstift (84) auf und betätigt einen in der hydraulischen Steuerung verschiebbar angeordneten Kolben (86), von dessen Gehäusebohrung (88) eine in den drucklosen Sumpf (90) des hydraulischen Getriebes führende Leitung (92) abzweigt. Der Kolben (86) wird durch eine Druckfeder (94) in einer Stellung gehalten, in der die Leitungen (76) und (92) durch den Kolben (86) unterbrochen sind. Wird hingegen die Spule (82) mit elektrischer Spannung versorgt, so drückt das Ankerteil (84) den Kolben (86) auf der Zeichnung nach rechts, wobei die an dem Kolben ausgebildete Ringnut (96) nunmehr die Leitungen (76) und (92) miteinander verbindet, so daß der Druckbeaufschlagungsraum (72) der Kupplung (70) drucklos und somit die Kupplung (70) gelöst wird. Ein Lösen der Kupplung (70) bewirkt, daß trotz über die Wähleinrichtung eingelegter Gangstufe der Kraftfluß im automatischen Getriebe unterbrochen ist.

Am Bremspedal (98) des Kraftfahrzeuges ist wiederum ein Unterbrecherschalter (100) angeordnet, der über den Zündschalter (102) des Kraftfahrzeuges mit Spannung versorgt ist. Der Ausgang (104) des Unterbrecherschalters (100) ist mit einem elektronischen Steuergerät (106) verbunden, welches zudem mit dem Signal Zündung ein -aus und über einen weiteren Schalter (108) an der Wähleinrichtung (110) des Kraftfahrzeuges mit einem Signal versorgt ist, wenn sich die Wähleinrichtung (110) in der Stellung P oder N befindet. Das elektronische Steuergerät (106) legt die Spule (82) des elektromagnetischen Schaltventiles (80) an Spannung, wenn die Signale Zündung ein und Wählhebel in Stellung N oder P vorliegen. Dementsprechend wird beim Starten des Kraftfahrzeuges die Kupplung (70) gelöst. Wird nunmehr auf die Bremse getreten, so wird dem elektronischen Steuergerät (106) ein Signal über die Leitung (104) darüber zugeleitet, daß die Bremse des Kraftfahrzeuges betätigt ist. Daraufhin wird die Spannungszuführung zu dem elektromagnetischen Schaltventil (80) unterbrochen. Eine weitere Spannungszuführung erfolgt erst wieder, wenn die Signale Zündung ein und Wählhebelstellung in N oder P erneut gleichzeitig vorliegen.

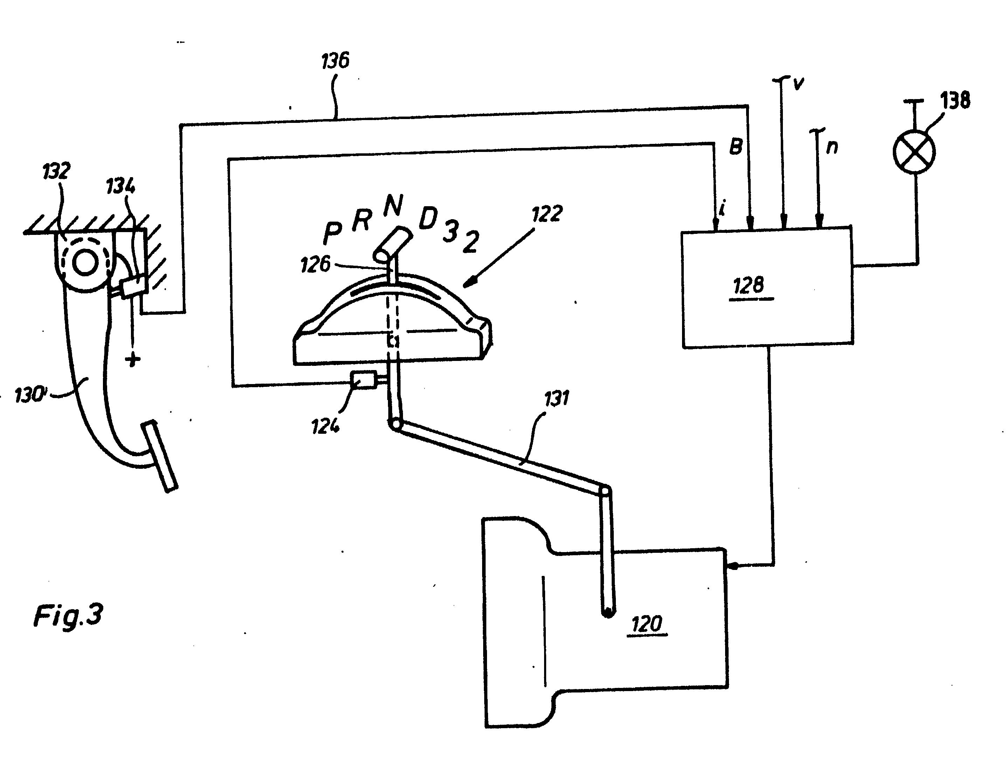

Die in Fig. 3 dargestellte Vorrichtung ist bei einem Kraftfahrzeug vorgesehen, welches mit einem elektronisch gesteuerten, automatischen Getriebe (120) versehen ist. Die Wähleinrichtung (122) ist mit einem Tastschalter (124) versehen, welcher die jeweils gewünschte Stellung des Wählhebels (126) an das elektronische Steuergerät (128) meldet. Ein mit dem Wählhebel (126) verbundenes Gestänge (131) dient zur mechanischen Einschaltung der Parkbremse des Getriebes. In das elektronische Steuergerät (128) werden die für den Betrieb des automatischen Getriebes motor- und fahrspezifischen Daten wie Fahrgeschwindigkeit, Motordrehzahl, Motorlast, Wählhebelstellung, sowie weitere Daten in bekannter Weise eingegeben. Das elektronische Steuergerät (128) steuert nicht dargestellte, elektromagnetische Stellglieder innerhalb der hydraulischen Steuerung des Getriebes (120) an, um die gewünschten und für einen einwandfreien Fahrbetrieb erforderlichen Übersetzungen bzw. Gangstufen zu schalten.

Ferner ist an dem Bremspedal (130) der Betriebsbremse des Kraftfahrzeuges bzw. an der das Bremspedal (130) aufnehmenden Konsole (132) ein Unterbrecherschalter (134) angeordnet, der bei einer Betätigung des Bremspedales (130) ebenfalls ein Signal über eine Leitung (136) an das elektronische Steuergerät (128) abgibt.

Das elektronische Steuergerät (128) ist derart programmiert, daß über den normalen Fahrbetrieb hinaus beim Einlegen einer Vorwärts- oder Rückwärtsgang-Fahrstufe aus der Stellung Parkbremse P oder Neutral N über den Wählhebel (126) der Schaltbefehl an die hydraulische Steuerung nur nach folgendem Ablaufschema erfolgt:

```
                              ●
                              │
                    ┌─────────┴─────────┐
                   ╱                     ╲        nein
                  ╱  Wählhebel in N oder P ╲─────────────────►
                   ╲                     ╱
                    └─────────┬─────────┘
                             ja
                              │
                    ┌─────────┴─────────┐
                   ╱                     ╲        nein
                  ╱    v      5 km/h      ╲─────────────────►
                   ╲                     ╱
                    └─────────┬─────────┘
                             ja
                              │
                    ┌─────────┴─────────┐
                   ╱       Wählhebel      ╲        nein
                  ╱ wird aus N oder P betätigt ╲──────────────►
                   ╲                     ╱
                    └─────────┬─────────┘
                             ja
                              │
           nein     ┌─────────┴─────────┐
      ◄─────────────╱ N länger als 1 s eingelegt ╲
                    └─────────┬─────────┘
                             ja
                              │
                    ┌─────────┴─────────┐
                   ╱                     ╲        nein
                  ╱    Bremse betätigt    ╲─────────────────►
                   ╲                     ╱
                    └─────────┬─────────┘
                             ja
                              │
                    ┌─────────┴─────────┐
                   ╱                     ╲        nein
                  ╱  n Mot     1500 min⁻¹ ╲─────────────────►
                   ╲                     ╱
                    └─────────┬─────────┘
                             ja
                              │
        ┌───────────────────────────────┐    ┌──────────────────────────┐
        │      Ausführen des            │    │  Schaltung nicht ausführen│
        │      Wählhebelwunsches        │    │                          │
        └───────────────────────────────┘    └──────────────────────────┘
                                                          │
                                              ┌──────────────────────────┐
                                              │    Warnleuchte 138        │
                                              │   "Bremse betätigen"      │
                                              └──────────────────────────┘
```

$n_{Mot}$     $1500\ min^{-1}$

Die elektrische Steuerung führt somit den über den Wählhebel eingeleiteten Befehl nur aus, wenn die Motordrehzahl nicht zu hoch ist (z. B. durch Defekt in der Gasbetätigung), wenn das Bremspedal gedrückt ist, wenn die N-Stellung nur einen kurzen Augenblick eingeschaltet war (z. B. beim Durchschalten von R auf D) oder wenn das Fahrzeug bereits schneller als eine definierte Mindestgeschwindigkeit rollt.

Weitere Kriterien können sein die Handbremse und die Betätigung der Fahrertüre. So kann es beim Schalten aus der N-Stellung heraus auch angezeigt sein, die Handbremse als Bedingung zum Schalten einer Fahrstufe anzuerkennen. Ferner kann jeweils mit dem Betätigen der Fahrertüre die Verriegelungseinrichtung erneut aktiviert werden, d. h., daß jeweils nach dem Einsteigen der Bedienungsperson die Bremse betätigt werden muß, um ein Schalten in die Fahrstufe zu ermöglichen.

Sofern über die Elektronik (128) festgestellt wird, daß die Bremse des Fahrzeuges nicht betätigt ist, steuert diese eine Anzeige (138) an (Fig. 3), die darauf hinweist, daß die Bremse betätigt werden soll.

Das Fahrgeschwindigkeitssignal V kann beispielsweise von der Geschwindigkeitsanzeige des Kraftfahrzeuges abgeleitet sein. Das Signal über die Motordrehzahl kann entweder von bereits vorhandenen, elektronischen Einrichtungen wie einer Kraftstoffeinspritzvorrichtung, einer elektronischen Zündanlage oder von einem Drehzahlmesser abgeleitet werden. Selbstverständlich bleibt die Gangstufe auch dann eingeschaltet, wenn nach vorangegangenem Signal über die Betätigung des Bremspedales (130) die Bremse wieder entlastet wird. Erst nach dem Wiedereinlegen der Stellung Neutral wird die Logik wieder in Gang gesetzt, sofern die Kriterien Fahrgeschwindikeit V und Motordrehzahl n erfüllt sind.

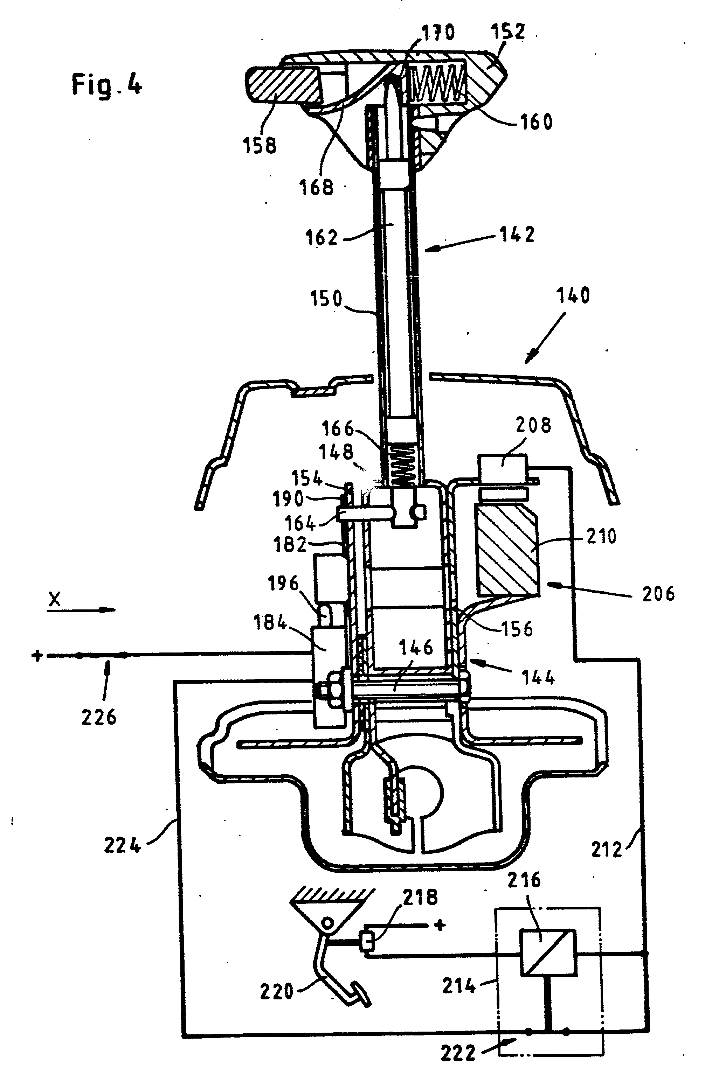

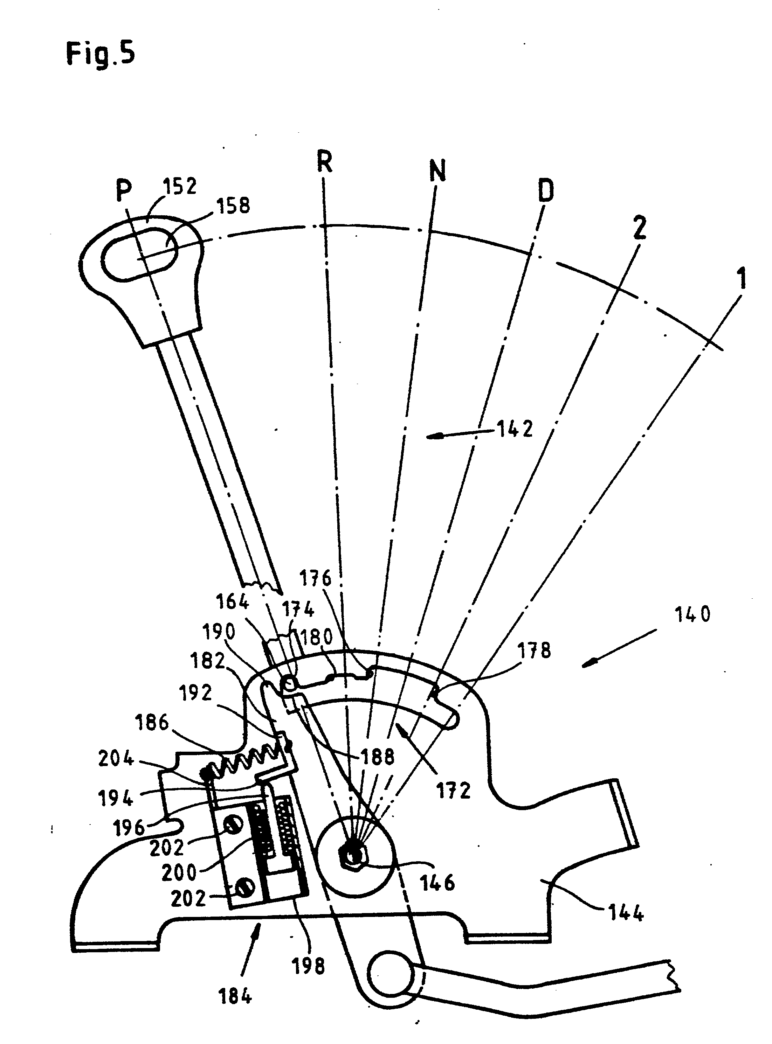

Die Figuren 4 und 5 zeigen eine Wählhebeleinrichtung (140) mit einem Wählhebel (142), der in einer am Boden des Kraftfahrzeuges befestigten Konsole (144) schwenkbar um einen Bolzen (146) gelagert ist. Der Wählhebel (142) setzt sich aus einem U-förmig gebogenem Basisteil (148), einem rohrförmigen Hebel (150) und einem Betätigungsgriff (152) zusammen. Das Basisteil (148) ist zwischen senkrecht aufragenden Wänden (154), (156) der Konsole (144) geführt.

Im Wählhebel (142) ist eine manuell betätigbare Sperreinrichtung vorgesehen, die im wesentlichen aus einer Drucktaste (158), einer Feder (160), einer Stange (162) mit einem radial über das Basisteil (148) hinausragendem Sperrstift (164) und einer weiteren Feder (166) gebildet ist.

Die verschiebbar im Betätigungsgriff (152) geführte Drucktaste (158) wird von der Feder (160) belastet und weist eine Rampe (168) auf, die an einer an der Stange (162) gelagerten Rolle (170) angreift. Wird die Drucktaste (158) in den Betätigungsgriff (152) hinein gegen die Kraft der Feder (160) verschoben, so wird über die Rampe (168) und die Rolle (170) die im Hebel (150) geführte Stange (162) nach unten verschoben und umgekehrt. Die Rückstellung der Stange (162) erfolgt durch die in den Hebel (150) eingesetzte Feder (166).

Der sich durch das Basisteil (148) erstreckende Sperrstift (164) greift in eine im wesentlichen schlitzförmige Ausnehmung bzw. Kulisse (172) der benachbarten Wand (154) der Konsole (144) ein. In dieser Kulisse (172) ist eine Vertiefung (174) vorgesehen, die im Zusammenwirken mit dem Sperrstift (164) den Wählhebel (142) in der Stellung P sperrt. Ferner sind Anschlagbereiche (176) für die N-Stellung, (178) für die Fahrstufte 2 und (180) für den Rückwärtsgang R vorgesehen.

Im Rahmen der Erfindung von Interesse ist jedoch nur die Vertiefung (174), in deren Bereich als Verriegelungseinrichtung ein Verriegelungsglied (182), ein elektromagnetisches Stellglied (Einrichtung) (184) und eine Rückzugsfeder (186) angeordnet sind.

Das Verriegelungsglied (182) ist durch einen Hebel aus Flachmaterial gebildet, der auf dem Bolzen (146) schwenkbar gelagert und befestigt ist. An dem frei abragenden Arm des Verriegelungsgliedes (182) ist eine Stufe (188) mit einer Nase (190) angeformt. Die Stufe (188) schiebt sich in der einen Endstellung des Verriegelungsgliedes (182) unter den Sperrstift (164), bis die Nase (190) am Außenumfang des Sperrstiftes (164) anliegt. In dieser Stellung ist der Wählhebel (142) in der P-Stellung verriegelt, weil der Sperrstift (164) nicht mehr über die Drucktaste (158) nach unten verschiebbar ist.

An das Verriegelungsglied (182) ist ein Winkelhebel angeformt, an dessen einem Schenkel (192) die Rückzugsfeder (186) eingehängt ist. An dem anderen Schenkel (194) greift der verschiebbare Ankerstift (196) des elektromagnetischen Stellgliedes (184) an, in dessen Gehäuse (198) ferner die elektrische Spule (200) angeordnet ist. Das Gehäuse (198) ist mittels zweier Schrauben (202) an der Wand (154) der Konsole (144) befestigt, wobei an einem nach oben abragendem Arm (204) des Gehäuses (198) die Rückzugsfeder (186) verankert ist.

Auf der von der Verriegelungseinrichtung abgewandten Seite (Wand 156) der Wähleinrichtung (140) ist ein elektrischer Schalter (206) angeordnet, dessen beweglicher Schalterteil (208) am Basisteil (148) des Wählhebels (142) befestigt ist, während der feste Kontaktträger (210) an der Wand (156) festgelegt ist. Der elektrische Schalter (206) gibt in der Stellung P des Wählhebels (142) ein Minus-Signal ab, welches in nicht dargestellter Weise eine elektrische Anlaßsperre des Fahrzeuges überbrückt bzw. das Starten des Kraftfahrzeuges in der Stellung P ermöglicht. In allen anderen Wählhebelstellungen (auch N) kann nicht gestartet werden.

Dieses Minus-Signal wird über eine Leitung (212) der Steuerspule (216) eines Relais (214) zugeleitet, dessen anderer Ausgang mit dem Bremslichtschalter (218) am Bremspedal (220) des Kraftfahrzeuges verbunden ist. Der Bremslichtschalter (218) liegt am Pluspotential des elektrischen Bordnetzes des Kraftfahrzeuges. Die Schaltkontakte (222) des Relais (214) sind einerseits mit dem elektrischen Schalter (206) der Wählhebeleinrichtung (140) und andererseits über eine Leitung (224) mit der Spule (200) des elektromagnetischen Stellgliedes (184) verbunden. Der andere Ausgang der Spule (200) liegt über dem Zündschalter (226) wiederum am Pluspotential des Kraftfahrzeuges.

Die Zeichnung Fig. 5 zeigt die Wählhebeleinrichtung (140) in der in der P-Stellung befindlichen Position, wobei der Sperrstift (164) in der Vertiefung (174) der Kulisse (172) eingerastet ist. Das Bremspedal (220) ist nicht betätigt, so daß sich das Relais (214) in seiner Ruheposition befindet, in der die Schaltkontakte (222) geschlossen sind. Da der Zündschalter (226) ebenfalls geschlossen ist, liegt die Spule (200) des Stellgliedes (184) an Spannung. Dementsprechend wird der Ankerstift (196) aus dem Gehäuse (198) des Stellgliedes (182) heraus verschoben und verschwenkt das Verriegelungsglied (182) im Uhrzeigersinn, bis die Nase (190) am Sperrstift (164) anliegt. Es kann somit nicht aus der Stellung P geschaltet werden.

Wird jetzt die Bremse des Kraftfahrzeuges betätigt, so schließen die Kontakte des Bremslichtschalters (218) und die Steuerspule (216) des Relais (214) wird erregt und öffnet die Schaltkontakte (222). Dadurch liegt die Spule (200) des Stellgliedes (184) nicht mehr am Minus-Potential, so daß das Verriegelungsglied (182) durch die Rückzugsfeder (186) im Gegenuhrzeigersinn geschwenkt wird, bis die Stufe (188) den Sperrstift (164) freigibt. Nunmehr kann aus der Stellung P geschaltet werden, wobei damit verbunden das Minus-Signal der Wählhebeleinrichtung (140) bzw. des elektrischen Schalters (206) verschwindet und somit auch die Steuerspule (216) abfällt.

Wird die Wählhebeleinrichtung (140) wieder in die Stellung P geschaltet, so wird die Spule (200) des Stellgliedes (184) wieder an Minus-Potential gelegt und das Verriegelungsglied (182) entsprechend betätigt. Dabei reicht jedoch die am Wählhebel (142) aufgebrachte Schaltkraft leicht aus, um die Betätigungskraft des elektromagnetischen Stellgliedes (184) zu überdrücken, bis der Sperrstift (164) in die Vertiefung (174) der Kulisse (172) eingerastet ist und nunmehr das Verriegelungslgied (182) seine Verriegelungsstellung einnehmen kann.

Es versteht sich, daß die Erfindung nicht auf die gezeigten Ausführungsbeispiele beschränkt ist. Vielmehr sind auch Kombinationen der Ausführungsbeispiele untereinander denkbar, so kann auch die in den Figuren 4 und 5 gezeigte Verriegelungseinrichtung mittels eines Steuergerätes (128) gemäß Fig. 3 gesteuert sein. Ferner kann die Verriegelungseinrichtung derart erweitert sein, daß auch in der Stellung N des Wählhebels eine Verriegelung erfolgt.

## Patentansprüche

1. Betätigungsvorrichtung für ein automatisches Getriebe in einem Kraftfahrzeug, welches Kraftfahrzeug ein Bremspedal, ein Gaspedal und einen Wählhebel aufweist und der Wählhebel in eine Parkstellung (P) und in eine Neutralstellung (N) sowie in wenigstens eine Fahrstufe schaltbar ist, wobei eine Einrichtung vorgesehen ist, welche das Getriebe nur bei betätigtem Bremspedal aus P oder N in die Fahrstufe schalten läßt, dadurch gekennzeichnet, daß die Einrichtung (54; 70; 184) ferner mit einem Geschwindigkeitssensor und einem Verzögerungsglied verbunden ist und in der N-Stellung des Wählhebels (12; 126; 142) nur aktiviert ist, wenn die Geschwindigkeit V unterhalb eines definierten Grenzwertes liegt und die N-Stellung länger als eine bestimmte Zeitdauer eingelegt ist.

2. Betätigungsvorrichtung nach Anspruch 1, dadurch gekennzeichnet, daß die Einrichtung (184) nur aktivierbar ist, wenn der Wählhebel in P oder N positioniert ist (Schalter 206).

3. Betätigungsvorrichtung nach Anspruch 1 oder 2, dadurch gekennzeichnet, daß die Einrichtung durch ein unmittelbar am automatischen Getriebe vorgesehenes, elektromagnetisches Schaltventil (80) gebildet ist, welches die hydraulische Beaufschlagung zumindest einer dem Kraftfluß im automatischen Getriebe unterbrechenden, hydraulischen Kupplung (70) steuert.

4. Betätigungsvorrichtung nach Anspruch 1 oder 2, dadurch gekennzeichnet, daß die Einrichtung einen von einem Elektromagneten betätigten Mechanismus mit einem Verriegelungsglied (182) enthält, welches in die Bewegungsbahn eines zu einer manuell betätigbaren Sperreinrichtung am Wählhebel gehörenden Sperrgliedes (164) bewegbar ist.

5. Betätigungsvorrichtung nach einem oder mehreren der vorhergehenden Ansprüche, dadurch gekennzeichnet, daß bei aktivierter Einrichtung eine Warnvorrichtung (138) ein Signal abgibt, welches auf die Anforderung «Bremse betätigen» hinweist.

## Claims

1. Actuating device for an automatic transmission system in a motor vehicle, which motor vehicle has a brake pedal, an accelerator pedal and a selector lever and the selector lever can be shifted into a parking position (P) and into a neutral position (N) and into at least one driving position, an appliance being provided which only permits the transmission system to be shifted from P or N into the driving position when the brake pedal is applied, characterized in that the appliance (54; 70; 184) is also connected to a speed sensor and a delay element and is only activated in the N-position of the selector lever (12; 126; 142) when the speed V is below a defined limit and the N-position is engaged for longer than a certain period.

2. Actuating device according to claim 1, characterized in that the appliance (184) is only activated when the selector lever is positioned in P or N (switch 206).

3. Actuating device according to claim 1 or 2, characterized in that the appliance is formed by an electromagnetic shift valve (80) which is provided directly at the automatic transmission system and which controls the hydraulic admission to at least one hydraulic coupling (70) which interrupts the power flow in the automatic transmission system.

4. Actuating device according to claim 1 or 2, characterized in that the appliance contains a mechanism, operated by an electromagnet, with an interlocking member (182) which can be moved into the path of a blocking member (164) belonging to a manually operated blocking device on the selector lever.

5. Actuating device according to one or more of the preceding claims, characterized in that when the appliance is activated a warning device (138) gives a signal which indicates the request "apply brake".

**Revendications**

1. Dispositif de manœuvre pour une boîte de vitesses automatique dans un véhicule automobile, lequel véhicule automobile comporte une pédale de frein, une pédale d'accélérateur et un levier de sélection qui peut être placé dans une position de stationnement (P), dans une position de point mort (N) ainsi que dans au moins une position de passage d'une vitesse, un mécanisme étant prévu pour la boîte de vitesses ne puisse passer dans la vitesse de marche à partir de la position P ou N que quand la pédale de frein est manœuvrée, caractérisé en ce que ce mécanisme (54; 70; 184) est en outre relié à un détecteur de vitesse et à un organe de ralentissement et n'est activé, dans la position N du levier de sélection (12; 126; 142), que quand la vitesse V se situe au-dessous d'une valeur limite définie et que la position N a été occupée plus longtemps qu'une durée déterminée.

2. Dispositif de manœuvre selon la revendication 1, caractérisé en ce que le mécanisme (184) ne peut être activé que quand le levier de sélection a été placé en position P ou N (commutateur 206).

3. Dispositif de manœuvre selon la revendication 1 ou 2, caractérisé en ce que le mécanisme est constitué par une valve électromagnétique de commutation (80) qui est prévue directement sur la boîte de vitesses automatique et qui commande l'alimentation en fluide hydraulique d'au moins un accouplement hydraulique (70) qui interrompt le flux de force dans la boîte de vitesses automatique.

4. Dispositif de manœuvre selon la revendication 1 ou 2, caractérisé en ce que le mécanisme contient un dispositif actionné par un électro-aimant et comportant un organe de verrouillage (182) qui est déplaçable dans le trajet de déplacement d'un organe de blocage (164) faisant partie d'un dispositif de blocage manœuvrable à la main sur le levier de sélection.

5. Dispositif de manœuvre selon l'une quelconque des revendications 1 à 4, caractérisé en ce que quand le mécanisme est activé, un dispositif avertisseur (138) émet un signal qui attire l'attention sur la prescription "actionner le frein".

Fig.1

Fig.2

Fig.3

EP 0 246 353 B1

Fig. 4

Fig.5